Europäisches Patentamt

European Patent Office

Office européen des brevets

(19)

(11) Publication number: **0 066 793**
A2

## (12) EUROPEAN PATENT APPLICATION

(21) Application number: **82104637.2**

(22) Date of filing: **26.05.82**

(51) Int. Cl.³: **B 23 B 5/16**, B 23 B 31/40

(30) Priority: **29.05.81 IT 1811281**

(43) Date of publication of application: **15.12.82**
**Bulletin 82/50**

(84) Designated Contracting States: **AT BE CH DE FR GB LI LU NL SE**

(71) Applicant: **PRIMA "LA SALDATURA" S.r.l., Via Verdi, 9, I-46047 S. Antonio di Porto Mantovano Province of Mantova (IT)**

(72) Inventor: **Prima, Calogero, Via Verdi 7/9, I-464047 S.Antonio di Porto Mantovano (IT)**
Inventor: **Prima, Renato, Via Magellano 14, I-46047 Montata Carra di Porto Mantovano (IT)**
Inventor: **Prima, Maurizio, Via Bentivoglio 20, I-46100 Mantova (IT)**

(74) Representative: **Modiano, Guido et al, MODIANO & ASSOCIATI S.A.S. Via Meravigli, 16, I-20123 Milan (IT)**

(54) **Pipe cutter device.**

(57) The pipe milling or cutter device comprises spindle frame (8) restrained from rotating with respect and associated to a rod (1) which is locked onto a pipe (T) being machined, the cutting tool (37) being carried on the spindle (17) with the interposition of a carriage (33) operative to provide automatic radial feed features.

Thus, the cutting reaction couple generated on the spindle frame (8) is balanced without resorting to outside actions, thereby the possibility is afforded of cutting large thickness pipes.

This invention relates to a pipe milling or cutter device.

It is known that pipe jointing by welding includes a preliminary step of preparation of the edges to joined, which consists of imparting a special profile configuration to said edges, such as a bevel having a preset angle.

To carry out the above operation, which may be particularly difficult when pre-installed pipes are involved as is often the case with steam boiler servicing, particular apparatus have been proposed and are commercially available which, while affording advantageous working conditions over the grinding which was performed in the past, still have some less than fully satisfactory characteristics.

It should be first pointed out that the reaction couple transmitted during the cutting operation to the spindle frame requires to be, in prior apparatus, balanced with a manual action by the operator, who is consequently forced to work in rather uncomfortable conditions.

Also noteworthy is that conventional apparatus are deficient where the thickness of a pipe to be cut happens to be too large for an axial feed movement of the cutting or milling tool.

Thus the task of the invention is to provide a pipe milling or cutter device, wherein the reaction couple to the cutting which is generated on the spindle frame can be balanced without resorting to the manual action of the operator, and whereby large thickness pipes can also be cut.

Within the above task, it is an object of this invention to provide a pipe cutter device of limited weight and overall dimensions, thereby it becomes eminently suitable for machining pipes in the installed condition, to enable any type of preparation of the mating edges with a high degree of finish.

According to one aspect of the present invention, the above mentioned task and object are achieved by a pipe cutter device, characterized in that it comprises a rod provided with means for locking it with one end to the inside of a pipe being machined, said rod being adapted to carry a spindle frame matched thereto for just a degree of freedom to slide axially and containing a spindle coaxial with said rod, said spindle carrying a cutting tool rotatively driven by a motor made rigid with said spindle frame.

In a device of this type, it will be apparent that the spindle frame, being rotatively rigid with respect to the rod locked onto the pipe being machined, requires no manual action by the operator to be balanced.

Advantageously, the spindle will support the cutting tool through an intervening carriage adapted to permit an automatic radial feed movement, and it is then evident that the radial feed feature enables pipes of any thickness to be cut.

Further features and advantages will be more apparent from the the description of two preferred, but not limitative embodiments of the invention, illustrated by way of example and not of limitation in the accompanying drawings, where:

Figure 1 is a side view of a preferred embodiment of the invention, only the outline being shown of the spindle frame and carriage for radially feeding the tool, while the means of locking the device to the inside of a pipe are shown in full; indicated in dash lines is the outline of a pipe to be machined;

Figure 2 shows a cross-section view taken in the plane II-II of Figure 1;

Figure 3 shows a cross-section view through the spindle frame and spindle, taken at the area included between the two dash-and-dot lines of Figure 1;

Figure 4 shows a cross-section view taken in the plane IV-IV of Figure 3;

Figure 5 is a partly sectional side view of the radial feed carriage with the tool slide at its inward travel end, the outward travel end of the slide being indicated in dash-and-dot lines;

Figure 6 is a reduced scale top view of that portion of the spindle which comprises the carriage supporting yoke;

Figure 7 is a sectional view taken in the plane VII-VII of Figure 6; and

Figure 8 is a fragmentary side view of the spindle end according to a first variation.

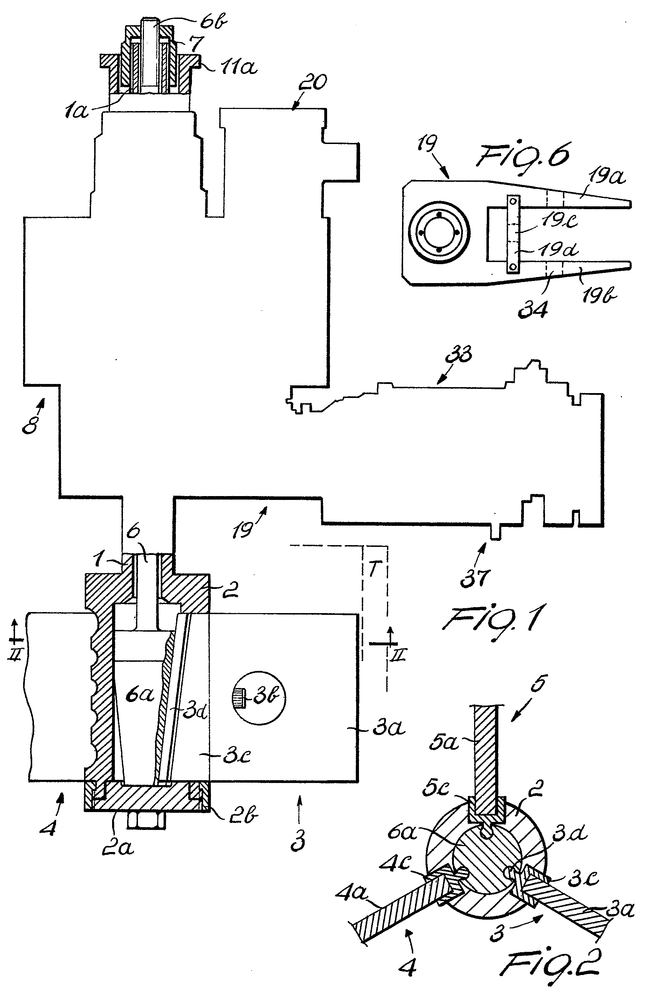

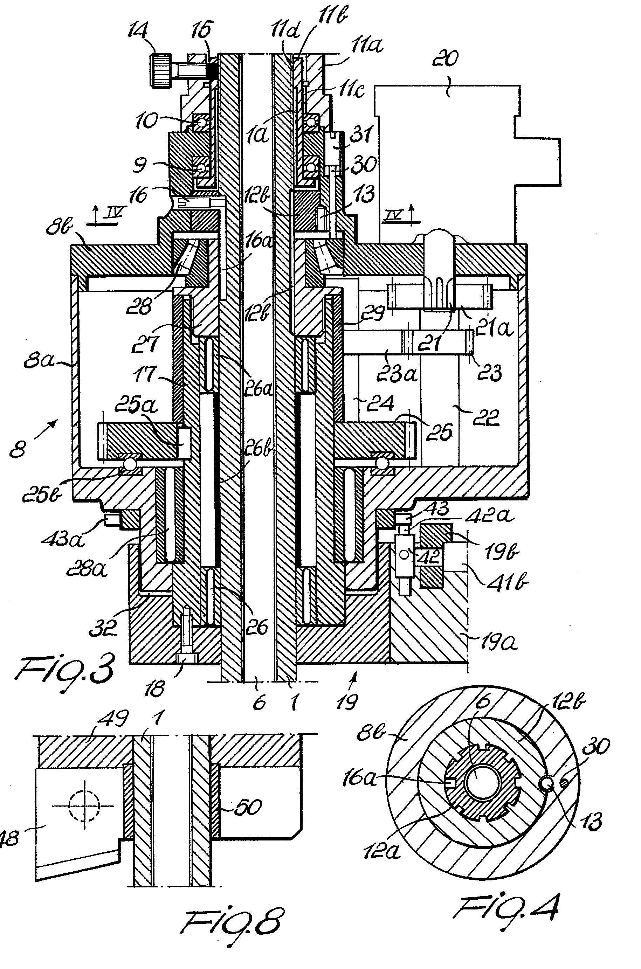

With reference to the cited Figures 1 to 7, there is indicated at 1 the rod, provided, at its end intended to be locked inside the pipe being machined T, with a head 2 having three radial slots wherein fins 3,4,5 can radially slide which are formed by small plates 3a,4a,5a, fastened, as by means of screws 3b, to the blocks 3c, 4c,5c which are formed with reliefs, such as 3d, for insertion through the slots in the conical end 6a of a tierod 6 extending into the rod 1; at the other end, the tierod 6 has a left-hand threaded portion 6b which is engaged by a nut 7 which also has a right-hand threaded portion in engagement with the threaded end 1a of the rod 1. A plug 2a and ring nut 2b close the head 2 at the bottom.

In order to lock the rod 1 with respect to the pipe being machined, it will be sufficient to introduce the head 2 thereinto with the fins 3,4,5 retracted, and manipulate then the nut 7 until the link 6 is brought into the illustrated position, with the fins expanded to contact the pipe walls.

At this time, the rod 1 will be locked in alignment with the axis of the pipe being machined thanks to the self-centering action provided by the three fins, thereby the device is positioned to effect the machining in accordance with a procedure to be explained hereinafter.

Indicated at 8 is the spindle frame of the device, which comprises a body 8a and cover 8b with which is associated, with the interposition of ball bearings 9 and 10, a handwheel including two elements 11a and 11b which are connected together by coupling on the thread 11c; the element 11b is formed with a thread 11d which engages with the thread on the end portion 1a of the rod 1, so that,as the handwheel is turned manually, the spindle frame 8 is also set into motion which can only be translated in the direction of the rod 1, it being connected to said rod by means of a spline formation      with the male element 12a on the rod 1 and female element on the ring 12b being removably attached to the cover 8b by means of a set screw 13.

It should pointed out that any reaction couple determined on the spindle frame 8 in the course of the cutting operation is balanced without involving external actions on said spindle frame, it being transmitted from said profile groove to the rod 1, which is locked to the pipe being machined.

The coupling of the thread 11d to that ot the portion 1a is provided with a holdback, comprising a knob 14 with a Teflon gasket 15, thereby preventing undesired movements.

Indicated at 16 is a travel limit set screw engaging with the groove 16a formed on the rod 1 and having a length equal to the stroke length to be imparted to the spindle frame 8 along said rod 1.

Inside the spindle frame 8, there is accommodated the spindle 17, clearly visible in Figure 3, whereto a yoke 19 is connected as by screws 18 which holds the carriage adapted to produce a radial feed for the cutter tool, as will be explained hereinafter; said spindle 17 is rotated by a pneumatic motor 20 through a drive train which starts with a pinion 21 coupled to a wheel 21a on the shaft 22 which also carries a pinion 23 coupled to a wheel 23a on a shaft 24 whereto a pinion, not shown in Figure 3, is also keyed which is coupled to a wheel 25 associated with the spindle 17 for free movement in the axial sliding movement direction and prevented from relative rotation by the tab 25a, and in contact with the bottom of the spindle frame 8 through a thrust bearing 25b. Between the spindle 17 and rod 1, there are interposed bearings 26 and 26a which are spaced apart by a ring 26b and tightened by a ring nut 27 which carries one of the bearings interposed between the spindle and spindle frame 8, indicated at 28, the other similar bearing being indicated at 28a; said ring nut 27 comprises a relief adapted to contact a spacer 29 resting against the gear wheel 25 under the action of a point 30 urged by the set screw 31 engaging with the spindle frame, on the bearing 28: thus, in accordance with the length of the spacer 29, the axial position of the spindle with respect to the spindle frame can be adjusted such as to obtain an optimum value for the play indicated at 32.

A detailed description will be now given, with reference to Figures 3,5,6, of the carriage which allows the radial feed to occur of the cutter tool for cutting large thickness pipes, generally indicated at 33, being carried, as mentioned, on the yoke 19 connected to the spindle 17.

Between the arms 19a and 19b of the yoke 19, there is set, in a hole 34, a pin 34a on which it is possible to lock, at any desired inclination  to thereby vary the type of bevel made on the pipe being machined, a bed 35 relatively whereto the tool holder slide 36 can slide in a radial direction, whereon the cutter tool 37 can be secured in any of the positions controlled through screws such as 37a.

The slide 36 is coupled with a lug 36a thereof to an operating screw 38 supported on the bed 35 and being provided with a ring gear 38a connected to a handwheel 38b; said gear wheel 38a meshes with a pinion 39 carried on a small shaft 39a slidable axially and restrained from rotating by means of a tab 40 on the inside of a hollow shaft 41, also carried on the bed 35, which extends into a swivel connected length 41a to reach a pin 41b inserted into the hole 19c in the bridge 19d between the arms of the yoke 19, which carries at its end a star 42 comprising pegs such as 42a adapted to contact a plurality of pegs such as 43 and 43a which are arranged radially and equidistantly on the spindle frame.

Inside the lug 36a of the slide a rod 44 is slidable which is provided on the spindle side thereof with a releasably lockable detent ring 44a, as well as with an end detent 44b, and at its inward end, with a lug 44c adapted to engage with the detents 39b of the shaft 39a; with said detents, there also engages a lever 45 pivoted to the bed 35, which has an elastic element, generally indicated at 46, effective to hold the lever 45 in a corresponding position to the position of engagement of the pinion 39 with the ring gear 38a.

Lastly, indicated at 47 is a guide pin for the small shaft 39a.

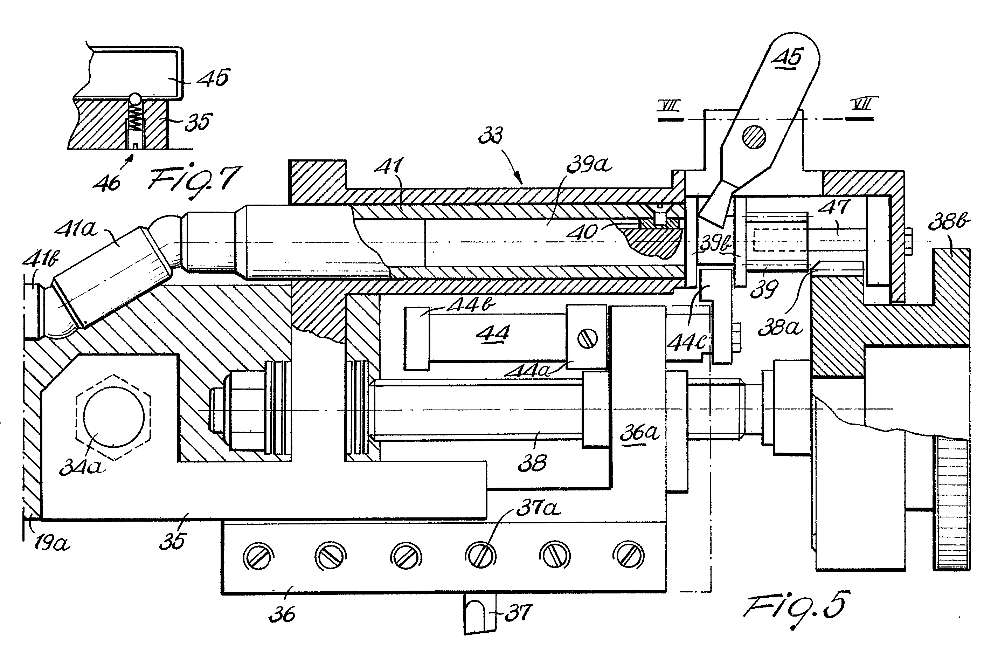

The operation description starts with the tool holder slide 36 being positioned at its inward travel limit as shown in full lines in Figure 5, that is from the moment when a radial feed movement throughout the pipe thickness has been completed.

The spindle rotation is now stopped, the whole spindle frame 8 is raised with respect to the rod 1, which as mentioned, is locked relatively to the pipe being machined, by the actuation of the element 11a of the handwheel, such as to bring the tool 37 out of contact with the pipe, and the handwheel 38b is operated until the slide 36 is moved to its outward travel limit, that is to the starting position for a fresh feed forward movement, as shown in dash-and-dot lines in Figure 5.

Then the lever 45 is operated to bring the pinion 39 into contact with the wheel 38a, thus preparing the device for automatic radial feed, and the spindle frame is lowered thereafter by operating the handwheel 11a according to the desired depth for the pass.

Now the spindle is rotated again to impart a cutting motion to the tool 37 and, by pegs such as 42a of the star 42 contacting the fixed pegs such as 43 and 43a, said star is rotated, and consequently, through the pin 41b and swiveled portion 41a, also the hollow shaft 41 and small shaft 39a with the pinion 39: then, also rotatively driven are the wheel 38a and the operating screw 38 which produces the automatic radial feed of the slide 36.

The radial feed movement is continued until the

- 10 -

lug 36a of the tool holder slide contacts the ring 44, and as said lug is further advanced, the displacement of the rod 44 toward the spindle is produced until the lug 44c brings the small shaft 39a into the position shown in Figure 5 with the pinion 39 removed from contact with the wheel 38a, the radial feed movement being now discontinued although the pinion 39 keeps on turning. Figure 8 illustrates a first variation of the invention: according to this embodiment, the cutter tool 48 is attached directly to the spindle 49, with a spacer ring 50 from the rod 1 being provided.

Of course, this solution can be adopted for machining small thickness pipes, wherein the tool driven of circular cutting motion can simultaneously act on the full pipe thickness, and the tool is translated axially by acting on the handwheel 11a.

It may be seen from the foregoing description that the invention provides a pipe cutter which can be conveniently operated by a single person even in the most uncomfortable conditions of installed pipe machining, since after the device rod has been locked with respect to the pipe being machined, it will be this rod that accommodates both the device weight and cut reaction couple.

A feature to be pointed out is the simple and reliable operation of that part of the device which allows the automatic radial feeding of the tool with travel limiting also automatic, thus making it possible to also machine pipes of large thickness in a quite convenient style.

The invention described is susceptible to many modifications and variations, all of which fall within the scope of this inventive concept: as an example, the fins which constitute the means of locking the rod inside the pipe being machined, instead of comprising each a plate and a block, may be a single piece construction, and the motor instead of being a pneumatic one may be an electric motor.

In practicing the invention, all of the details may be replaced with other technically equivalent elements; moreover, the materials used, as well as the shapes and dimensions, may be any ones to meet contingent requirements.

CLAIMS

1. A pipe milling or cutter device, characterized in that it comprises a rod (1) provided with means for locking it with one end to the inside of a pipe (T) being machined, adapted to carry a spindle frame (8) matched thereto for just a degree of freedom to slide axially and containing a spindle (17) coaxial with said rod (1), said spindle (17) carrying a cutting tool rotatively driven by a motor (20) made rigid with said spindle frame (8).

2. A pipe cutter device according to Claim 1, characterized in that the means for locking one end of the rod (1) to the inside of a pipe (T) to be machined comprises a plurality of radially sliding fins (3,4,5) guided in slots formed in one head (2) at the rod end and matched, by means of reliefs (3d) being inserted into grooves, with the conical end (6a) of a tierod (6) which extends into said rod (1) to protrude out of the other end where a left-hand thread (6b) is provided whereon a nut (7) is engaged which is also provided, on a larger diameter, with a right-hand threaded length adapted to engage with the end threaded length (1a) of said rod (1).

3. A pipe cutter device according to one or more of the preceding claims, characterized in that the fins (3,4,5) are three in number.

4. A pipe cutter device according to one or more of the preceding claims, characterized in that each fin (3,4,5) comprises a block (3c,4c,5c) having a relief (3d) associable with said tierod (6) conical end (6a), and a small plate (3a,4a,5a) removably attached to said block (3c,4c,5c) by screw means (3b).

5. A pipe cutter device according to Claims 1, 2 and 3, characterized in that each fin (3,4,5) is a single piece construction.

6. A pipe cutter device according to one or more of the preceding claims, characterized in that said spindle frame (8) is matched to said rod (1) by means of spline formation (12a, 12b).

7. A pipe cutter device according to Claim 6, characterized in that the female element (12b) of said spline formation is formed in a ring (12b) releasably attachable to the spindle frame (8).

8. A pipe cutter device according to one or more of the preceding claims, characterized in that it comprises a handwheel (11a, 11b) associated with the spindle frame (8) with the interposition of ball bearings (9,10), provided with a thread engaged on the rod threaded end portion thereby, by manually operating said handwheel (11a, 11b), the spindle frame (8) is caused to slide axially along the rod (1).

9. A pipe cutter device according to Claim 8, characterized in that it comprises a holdback (14, 15) formed on the threaded coupling between said handwheel (11a, 11b) and rod (1).

10. A pipe cutter device according to one or more of the preceding claims, characterized in that it comprises a travel limit set screw (16) rigid with the spindle frame (8) and inserted into a groove (16a) formed on the rod (1).

11. A pipe cutter device according to one or more of the preceding claims, characterized in that said spindle (17), carried on said spindle frame (8) and rod (1) with the interposition of ball bearings (26, 26a), is provided with a ring gear (25) restrained from rotating by means of a tab (25a) and axially slidable, which receives its motion, with the interposition of a plurality of reduction gear pairs, from a pneumatic motor (20) and rests with the interposition of a thrust bearing (25b) at the bottom of the spindle frame (8), and is also provided with a ring nut (27) comprising a relief adapted to contact a spacer (29) resting against said ring gear (25) under the action of a pointed member (30) urged by a set screw (31) engaged with the spindle frame (8), on a bearing (28) rigid with said ring nut (27), thereby controlling the relative axial positions of said spindle (17) and spindle frame (8).

12. A pipe cutter device according to one or more of the preceding claims, characterized in that said spindle (17) holds said cutting tool (37) with the interposition of a carriage (33) adapted to allow automatic radial feeding.

13. A pipe cutter device according to Claim 12, characterized in that the carriage (33) adapted to allow the automatic radial feeding of the cutting tool (37) comprises a tool holding slide (36) slidable in a radial direction with respect to a bed (35) carried tiltably on a yoke (19a, 19b) which extends from the spindle (17), coupled to an operating screw (38) supported by the bed (35) and provided with a ring gear (38a) connected to a handwheel (38b), which meshes with a pinion (39) supported on a small shaft (39a) axially slidable and restrained from rotating in the inside of a hollow shaft (41) which has at its end, with the interposition of a swiveled portion (41a), a peg star (42) adapted to contact a plurality of pegs (43, 43a) arranged radially and equidistantly on the spindle frame (8), there being pro - vided a radial rod (44) supported slidably on the slide (36) and having on the spindle side a releasably securable detent ring (44a), and at the outward end, a lug (44c) adapted to engage with detents (39b) provided on the pinion slidable shaft (39a), there being further provided a lever (45) engaged with said detent adapted to produce the engagement of the pinion (39)with the ring gear (38a).

14. A pipe cutter device according to Claim 13, characterized in that the cutting tool (37) is associated with the slide (36) at any desired position.

15. A pipe cutter device according to Claim 13, characterized in that it comprises an elastic element (46) for holding the lever (45) in the engagement position of the pinion (39) with the ring gear (38a).

16. A pipe cutter device according to one or more of the preceding claims 1 to 11, characterized in that the cutting tool (37) is secured directly to the spindle (17).

Fig.6

Fig.1

Fig.2

Fig.3

Fig.8

Fig.4

Fig.7

Fig.5